# EUROPÄISCHE PATENTSCHRIFT

(11) **EP 1 042 599 B1**
(45) Veröffentlichungstag und Bekanntmachung des Hinweises auf die Patenterteilung: **13.08.2003**
(21) Anmeldenummer: 98966218.4
(22) Anmeldetag: 17.12.1998
(51) Int. Cl.: F02D 41/26

(54) **VERFAHREN ZUM BETREIBEN EINER BRENNKRAFTMASCHINE, INSBESONDERE EINES KRAFTFAHRZEUGS**
METHOD FOR OPERATING AN INTERNAL COMBUSTION ENGINE, ESPECIALLY OF AN AUTOMOBILE
PROCEDE POUR FAIRE FONCTIONNER UN MOTEUR A COMBUSTION INTERNE, EN PARTICULIER LE MOTEUR D'UN VEHICULE AUTOMOBILE

(30) Priorität: 24.12.1997 DE 19757875
(43) Veröffentlichungstag der Anmeldung: 11.10.2000
(73) Patentinhaber: ROBERT BOSCH GMBH, 70442 Stuttgart (DE)
(72) Erfinder: RIES-MUELLER, Klaus, D-74906 Bad Rappenau (DE); MOCKEN, Thomas, D-74321 Bietigheim-Bissingen (DE); TISCHER, Christian, D-71282 Hemmingen (DE)
(86) Internationale Anmeldenummer: DE9803710
(87) Internationale Veröffentlichungsnummer: WO99034104

(56) Entgegenhaltungen:
- EP-A- 0 360 528
- EP-A- 0 608 456
- WO-A-88/06236
- GB-A- 1 492 139
- GB-A- 2 058 406
- US-A- 5 162 999
- PATENT ABSTRACTS OF JAPAN vol. 095, no. 006, 31. Juli 1995 & JP 07 063108 A (NIPPONDENSO CO LTD), 7. März 1995

## Beschreibung

### Stand der Technik

Die Erfindung betrifft ein Verfahren zum Betreiben einer Brennkraftmaschine insbesondere eines Kraftfahrzeugs mittels eines Steuergeräts, bei dem eine Anzahl von Funktionen in zeitlichen Abständen und/oder in Abhängigkeit von der Drehzahl der Brennkraftmaschine durchgeführt werden, und bei dem eine die Auslastung des Steuergeräts darstellende Größe und eine die Drehzahl der Brennkraftmaschine darstellende Größe ermittelt wird. Des Weiteren betrifft die Erfindung eine Brennkraftmaschine insbesondere für ein Kraftfahrzeug, mit einem Steuergerät, von dem eine Anzahl von Funktionen in zeitlichen Abständen durchführbar ist, und von dem eine die Auslastung des Steuergeräts darstellende Größe und eine die Drehzahl der Brennkraftmaschine darstellende Größe ermittelbar sind.

Zur Steuerung und/oder Regelung von modernen Brennkraftmaschinen insbesondere von Kraftfahrzeugen ist es erforderlich, dass eine Vielzahl von Funktionen von einem Steuergerät, insbesondere von einem Mikroprozessor durchgeführt werden. So ist es einerseits erforderlich, dass sogenannte Grundfunktionen, wie beispielsweise die Masse des in den Brennraum der Brennkraftmaschine einzuspritzenden Kraftstoffs oder der Zeitpunkt der Entzündung der eingespritzten Kraftstoffmasse, in Abhängigkeit von der Drehzahl der Brennkraftmaschine ermittelt werden. Diese Funktionen sind somit drehzahlsynchron. Andererseits gibt es Funktionen, wie beispielsweise Adaptionsfunktionen, die in vorgegebenen zeitlichen Abständen von dem Steuergerät durchgeführt werden müssen. Bei derartigen Abständen kann es sich beispielsweise um ein Raster von 10 ms oder dergleichen handeln. Diese Funktionen sind somit zeitsynchron.

Bei einer hohen Drehzahl der Brennkraftmaschine müssen die drehzahlsynchronen Funktionen wesentlich häufiger durchgeführt werden als bei einer niederen Drehzahl. Kommen bei einer derartig hohen Drehzahl dann auch noch eine Mehrzahl von zeitsynchronen Funktionen hinzu, die von dem Steuergerät berechnet werden müssen, so ist es möglich, dass das Steuergerät überlastet wird. Dies kann zu Fehlfunktionen des Steuergeräts führen.

Dabei kann eine die Auslastung eines Rechners darstellende Größe ermittelt werden, wie dies in der EP 0 360 528 A gezeigt ist, in welcher bei einer Motorsteuerung die Belastung des Rechners als Anteil der benutzten Zeit im Verhältnis zur Verfügung stehenden Zeit bestimmt wird. Bei einem Schwellwert der Belastung wird dann die Anzahl der drehzahlsynchronen Rechenaufgaben sprungartig halbiert, indem jeder zweite der damit verbundenen Interrupt-Prozesse unterbunden wird. Die genannte Schrift zeigt aber nicht ab einer Drehzahlschwelle den zeitlichen Abstand der Rechenaufgaben bzw. der Steuerfunktionen zu erhöhen.

Davon ausgehend ist es die Aufgabe der Erfindung, ein Verfahren zum Betreiben einer Brennkraftmaschine insbesondere eines Kraftfahrzeugs zu schaffen, das Maßnahmen basierend auf einer neuartigen Auslastungsermittlung enthält, die einer Überlastung des Steuergeräts entgegenwirken.

Diese Aufgabe wird bei einem Verfahren bzw. bei einer Brennkraftmaschine der eingangs genannten Art durch die Erfindung dadurch gelöst, dass der zeitliche Abstand der Durchführung der Funktionen erhöht wird, wenn die die Drehzahl darstellende Größe größer ist als ein Drehzahlschwellwert und gegebenenfalls zusätzlich die Anzahl der durchgeführten Funktionen verringert wird wenn die die Auslastung darstellende Größe größer ist als ein Auslastungsschwellwert.

Durch die Verminderung der Anzahl der durchgeführten Funktionen und/oder die Erhöhung des zeitlichen Abstands der Durchführung der Funktionen wird einer Überlastung des Steuergeräts entgegengewirkt. Zeigt beispielsweise die die Auslastung des Steuergeräts darstellende Größe an, dass das Steuergerät nahezu überlastet oder bereits überlastet ist, so wird erfindungsgemäß zusätzlich die Anzahl der durchgeführten Funktionen verringert, mit der Folge, dass das Steuergerät weniger Funktionen ausführen muss und damit weniger belastet ist. Der drohenden Überlastung des Steuergeräts bzw. der bereits eingetretenen Überlastung des Steuergeräts wird auf diese Weise entgegengewirkt. Wird durch die die Drehzahl der Brennkraftmaschine darstellende Größe angezeigt, dass insbesondere die genannten Grundfunktionen aufgrund einer hohen Drehzahl sehr häufig durchgeführt werden müssen, und dass dadurch möglicherweise eine Überlastung des Rechengeräts möglich ist, so wird erfindungsgemäß der zeitliche Abstand der Durchführung der Funktionen erhöht. Dies hat zur Folge, dass die genannten Funktionen nicht mehr so häufig durchgeführt werden müssen, und dass dadurch das Steuergerät entlastet wird. Auch insoweit wird also einer Überlastung des Steuergeräts entgegengewirkt.

Insgesamt wird durch die erfindungsgemäßen Maßnahmen verhindert, dass das Steuergerät überlastet wird. Das Risiko, dass durch Überlastungen Fehler auftreten, wird dadurch wesentlich verringert. Die Erfindung trägt somit zum korrekten und sicheren Betrieb der Brennkraftmaschine bei.

Bei einer vorteilhaften Weiterbildung der Erfindung werden die Anzahl von Funktionen in Klassen mit verschiedenen Prioritäten eingeteilt, und es werden die Funktionen mit der niedersten Priorität nicht durchgeführt, wenn die die Auslastung darstellende Größe größer ist als der Auslastungsschwellwert. Auf diese Weise wird erreicht, dass zuerst diejenigen Funktionen nicht durchgeführt werden, die für den Betrieb der Brennkraftmaschine nur eine weniger große Bedeutung haben. Damit wird gewährleistet, dass die für den Betrieb der Brennkraftmaschine wesentlichen Funktionen zumindest nicht sofort abgeschaltet werden. Der korrekte und sichere Betrieb der Brennkraftmaschine wird somit auch nach einer Abschaltung von Funktionen im Wesentlichen gewährleistet.

Bei einer weiteren vorteilhaften Weiterbildung der Erfindung wird ein weiterer Schwellwert vorgesehen, der kleiner oder gleich ist als der Auslastungsschwellwert, und es werden die Funktionen mit der zweitniedersten Priorität nicht durchgeführt, wenn die die Auslastung darstellende Größe größer ist als der weitere Schwellwert. Auf diese Weise wird erreicht, dass - wenn die Abschaltung der Funktionen mit der niedersten Priorität noch nicht ausreichend ist, um eine Überlastung des Steuergeräts zu verhindern - zusätzlich noch diejenigen Funktionen abgeschaltet werden, die mit der zweitniedersten Priorität versehen sind. Dies stellt insgesamt eine stufenweise Abschaltung von Funktionen dar, wobei bei jeder Stufe immer die Funktionen mit den jeweils niedersten Prioritäten nicht mehr durchgeführt werden. Es wird somit gewährleistet, dass die für den Betrieb der Brennkraftmaschine wesentlichen Funktionen erst sehr spät abgeschaltet werden. Der korrekte und sichere Betrieb der Brennkraftmaschine wird auf diese Weise auch bei einer großen Überlastung des Steuergeräts weitgehend aufrechterhalten.

Besonders zweckmäßig ist es, wenn die folgenden Funktionen vorgesehen sind, wobei die Reihenfolge der Funktionen deren Priorität entspricht: Grundfunktionen, wie z. B. Einspritzung, Zündung; Motorschutzfunktionen, wie z. B. Klopfregelung; Abgasfunktionen, wie z. B. Lambdaregelung; Komfortfunktionen, wie z. B. Lastschlagdämpfung; Diagnosefunktionen, wie z. B. Erkennung von Aussetzern; Adaptionsfunktionen, wie z. B. Anpassung an Fahrzeugstreuungen. Aufgrund der hohen Priorität beispielsweise der Abgasfunktionen wird gewährleistet, dass die Wahrscheinlichkeit für die Abschaltung dieser Funktionen äußerst gering ist. Es versteht sich, dass die Aufgliederung in derartige Funktionen, wie auch die Zuordnung von Prioritäten zu derartigen Funktionen auch andersartig ausgeführt sein kann.

Bei einer vorteilhaften Ausgestaltung der Erfindung werden zumindest einige der Funktionen, beispielsweise Grundfunktionen, in jedem Fall vollständig durchgeführt. Dies bedeutet, dass die Grundfunktionen nicht abgeschaltet werden können. Auf diese Weise wird erreicht, dass die Brennkraftmaschine in jedem Fall lauffähig bleibt. Bei einer vorteilhaften Weiterbildung der Erfindung werden zumindest einige der Funktionen, beispielsweise Abgasfunktionen, in Teilfunktionen zerlegt, und es werden nur eine oder mehrere der Teilfunktionen nicht durchgeführt. So ist es beispielsweise möglich, dass auch bei einer Auslastung des Steuergeräts, bei der an sich die Abgasfunktionen abgeschaltet werden müssten, diese Abgasfunktionen nicht vollständig abgeschaltet werden, sondern zumindest noch grundlegende Teilfunktionen der Abgasfunktionen weiterhin durchgeführt werden. Auf diese Weise wird gewährleistet, dass auch bei einer Überlastung des Steuergeräts beispielsweise gesetzliche Abgasbestimmungen, die durch die Abgasfunktionen realisiert sind, in jedem Fall eingehalten werden.

Bei einer anderen vorteilhaften Weiterbildung der Erfindung wird der zeitliche Abstand der Durchführung der Funktionen mit der Drehzahl der Brennkraftmaschine bzw. der Auslastung des Steuergeräts linear oder sprungartig erhöht, wenn die die Drehzahl darstellende Größe bzw. die die Auslastung darstellende Größe größer ist als der Drehzahlschwellwert bzw. der Auslastungsschwellwert. Auf diese Weise wird erreicht, dass der zeitliche Abstand der Durchführung der Funktionen z. B. mit steigender Drehzahl größer wird. Dabei kann zwischen diesem zeitlichen Abstand und der Drehzahl ein linearer Zusammenhang bestehen, oder es erfolgt die Vergrößerung des zeitlichen Abstand in einem oder in mehreren Sprüngen. In jedem Fall wird durch die beschriebene Vorgehensweise einer Überlastung des Steuergeräts entgegengewirkt, so dass ein korrekter und sicherer Betrieb des Steuergeräts erreicht wird. Entsprechendes gilt bei steigender Auslastung des Steuergeräts.

Bei einer weiteren vorteilhaften Weiterbildung der Erfindung wird ein weiterer Schwellwert vorgesehen, der größer ist als der Drehzahlschwellwert bzw. der Auslastungsschwellwert, und es wird der zeitliche Abstand der Durchführung der Funktionen konstant gehalten, wenn die die Drehzahl darstellende Größe bzw. die die Auslastung darstellende Größe größer ist als der weitere Schwellwert. Dies bedeutet, dass nach einem Überschreiten des weiteren Schwellwerts der zeitliche Abstand der Durchführung der Funktionen nicht weiter erhöht wird, sondern konstant bleibt.

Bei einer vorteilhaften Ausgestaltung der Erfindung wird der zeitliche Abstand der Durchführung nur bei denjenigen Funktionen erhöht, die nicht von der Drehzahl der Brennkraftmaschine abhängig sind, also beispielsweise nicht bei Grundfunktionen. Auf diese Weise wird gewährleistet, dass beispielsweise die Grundfunktionen in jedem Fall in dem für sie erforderlichen Zeitraster durchgeführt werden. Beispielsweise bei den Grundfunktionen wird also der zeitliche Abstand der Durchführung auch bei einer hohen Auslastung des Steuergeräts nicht verändert. Damit wird gewährleistet, dass auch bei einer hohen Auslastung des Steuergeräts die Grundfunktionen korrekt und sicher durchgeführt werden, und damit der Betrieb der Brennkraftmaschine in jedem Fall aufrechterhalten wird.

Von besonderer Bedeutung ist die Realisierung des erfindungsgemäßen Verfahrens in der Form eines Steuerelements, das für ein Steuergerät einer Brennkraftmaschine insbesondere eines Kraftfahrzeugs vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. In diesem Fall wird also die Erfindung durch ein auf dem Steuerelement abgespeichertes Programm realisiert, so dass dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, beispielsweise ein Read-Only-Memory.

Weitere Anwendungsmöglichkeiten und Vorteile der Erfindung ergeben sich aus der nachfolgenden Beschreibung von Ausführungsbeispielen der Erfindung, die in den Figuren der Zeichnung dargestellt sind.
- Figur 1: zeigt eine schematische Auflistung von Funktionen und zugehörigen Prioritäten im Zusammenhang mit einem ersten Ausführungsbeispiel eines erfindungsgemäßen Verfahrens zum Betreiben einer Brennkraftmaschine insbesondere eines Kraftfahrzeugs;
- Figur 2: zeigt ein schematisches Ablaufdiagramm des Verfahrens nach dem ersten Ausführungsbeispiel; und
- Figur 3: zeigt eine schematische Darstellung eines Zusammenhangs zwischen der Drehzahl N und dem zeitlichen Abstand A der Durchführung von Funktionen im Zusammenhang mit einem zweiten Ausführungsbeispiel eines erfindungsgemäßen Verfahrens zum Betreiben einer Brennkraftmaschine.

Bei einer beispielsweise vierzylindrigen Brennkraftmaschine wird in jedem der Zylinder durch einen hin- und herbewegbaren Kolben ein Brennraum begrenzt. Über Ventile ist der Brennraum mit einem Ansaugrohr und einem Abgasrohr verbunden. Des Weiteren sind dem Brennraum ein Einspritzventil und eine Zündkerze zugeordnet, mit deren Hilfe Kraftstoff in den Brennraum eingespritzt und entzündet werden kann. Des Weiteren weist die Brennkraftmaschine ein Steuergerät auf, das mit einer Mehrzahl von Sensoren verbunden ist, beispielsweise mit einem Luftmassenmesser im Ansaugrohr und/oder einem Lambdasensor im Abgasrohr, und das dazu geeignet ist, eine Mehrzahl von Aktoren anzusteuern, beispielsweise das Einspritzventil und die Zündkerze.

Für die Steuerung und/oder Regelung der Brennkraftmaschine werden von dem Steuergerät eine Anzahl von Funktionen durchgeführt. Bei diesen Funktionen handelt es sich beispielsweise um die Einspritzung, bei der in Abhängigkeit von der an der Brennkraftmaschine anliegenden Last eine in den Brennraum einzuspritzende Kraftstoffmasse von dem Steuergerät ermittelt wird, oder es handelt sich um eine Lambdaregelung, bei der das Kraftstoff/Luftgemisch, das im Brennraum mit Hilfe der Zündkerze entzündet wird, derart eingestellt wird, dass möglichst wenig schadstoffhaltige Abgase entstehen, oder es handelt sich um sonstige Funktionen, mit denen das Steuergerät auf den Betrieb der Brennkraftmaschine einwirkt.

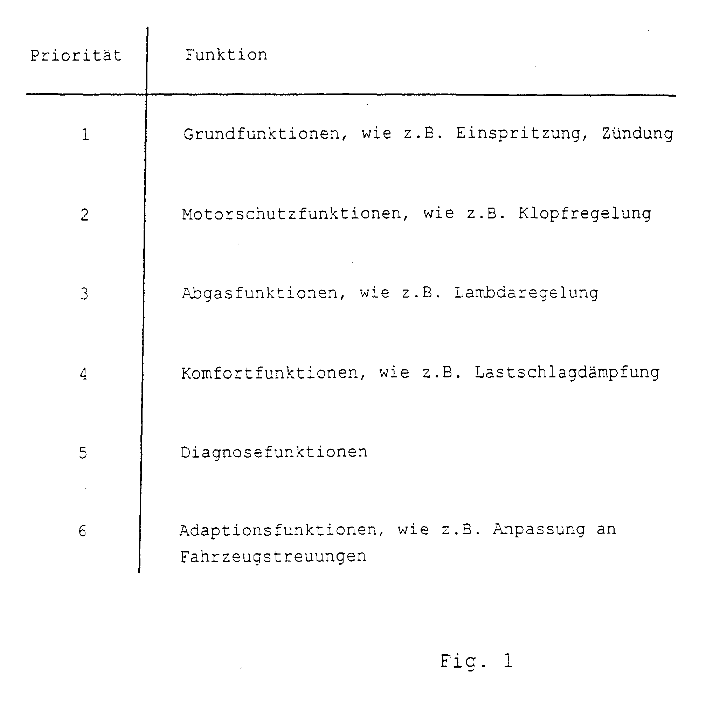

In der Figur 1 sind derartige Funktionen tabellenartig aufgelistet, wobei den einzelnen Funktionen jeweils eine Priorität zugeordnet ist. Die Priorität 1 hat dabei die höchste Wertigkeit und die Priorität 6 hat die niederste Wertigkeit.

Nach der Figur 1 ist den Grundfunktionen der Brennkraftmaschine die höchste Priorität 1 zugeordnet. Insbesondere der Einspritzung und der Zündung werden also höchste Priorität eingeräumt. Funktionen, die dem Schutz der Brennkraftmaschine insbesondere vor Zerstörung dienen, wie beispielsweise eine Klopfregelung, besitzen die Priorität 2. Die nächste Priorität 3 ist den Abgasfunktionen zugeordnet, beispielsweise der Lambdaregelung, mit denen die Schadstofferzeugung der Brennkraftmaschine auf ein Minimum reduziert werden. Sogenannte Komfortfunktionen, wie beispielsweise eine Dämpfung bei einem Übergang von einem Schubbetrieb in eine Beschleunigung, ist die Priorität 4 zugeordnet. Die zweitniederste Priorität 5 besitzen die Diagnosefunktionen, mit deren Hilfe bestimmte Fehlfunktionen der Brennkraftmaschine erkannt werden können. Schließlich ist den Adaptionsfunktionen die niederste Priorität 6 zugeordnet. Bei derartigen Adaptionsfunktionen handelt es sich beispielsweise um die Erkennung und den Ausgleich der Folgen von Fertigungstoleranzen bei der Herstellung verschiedener Brennkraftmaschinen desselben Typs.

Wie bereits erwähnt, werden all diese Funktionen von dem Steuergerät der Brennkraftmaschine durchgeführt. Dabei wird unterschieden zwischen sogenannten drehzahlsynchronen Funktionen und sogenannten zeitsynchronen Funktionen.

Bei den Grundfunktionen, also beispielsweise bei der Einspritzung und der Zündung, handelt es sich um drehzahlsynchrone Funktionen. Dies bedeutet, dass die für die Einspritzung oder die Zündung erforderlichen Berechnungen drehzahlabhängig durchgeführt werden. Bei der beispielhaften vierzylindrigen Brennkraftmaschine muss also alle 180 ° Kurbelwellenwinkel die Einspritzung und die Zündung für einen der Zylinder berechnet werden. Dies hat zur Folge, dass bei einer höheren Drehzahl die Häufigkeit der Berechnung der Grundfunktionen pro Zeiteinheit größer ist als bei einer geringeren Drehzahl. Bei der höheren Drehzahl wird also das Steuergerät durch die Berechnungen der Grundfunktionen stärker belastet als bei einer geringeren Drehzahl.

Ein Beispiel für zeitsynchrone Funktionen sind die Adaptionsfunktionen. Derartige zeitsynchrone Funktionen werden in einem festen zeitlichen Raster aufgerufen und durchgeführt. Bei einem derartigen zeitlichen Raster kann es sich beispielsweise um einen zeitlichen Abstand von 10 ms oder 50 ms oder dergleichen handeln. Die Häufigkeit der Durchführung von zeitsynchronen Funktionen wird also mit steigender Drehzahl der Brennkraftmaschine nicht größer.

Es ist möglich, dass das Steuergerät insbesondere bei hohen Drehzahlen der Brennkraftmaschine aufgrund der Durchführung von drehzahlsynchronen Funktionen und ggf. der zusätzlich durchzuführenden zeitsynchronen Funktionen stark belastet oder gar überbelastet wird. Damit dies nicht zu Fehlfunktionen des Steuergeräts führt, wird eine Größe RA ermittelt, die die Rechnerauslastung des Steuergeräts darstellt. Eine Möglichkeit, diese Rechnerauslastung RA zu ermitteln, besteht darin, die Häufigkeit oder die Laufzeit von Hintergrund- bzw. Leerlaufprogrammen des Steuergeräts zu berechnen. Steigt beispielsweise die Laufzeit von Hintergrundprogrammen, so bedeutet dies, dass die Rechnerauslastung geringer wird. Umgekehrt ist die Rechnerauslastung hoch, wenn nur noch selten Hintergrundoder Leerlaufprogramme ablaufen.

Beispielhaft wird die Rechnerauslastung in Prozent angegeben. 100 % Rechnerauslastung RA bedeutet dabei, dass der Rechner voll ausgelastet ist und bei einer weitergehenden Belastung überlastet wird. Eine Rechnerauslastung RA von 100 % sollte deshalb vermieden werden. Darüber hinaus sollte ein gewisser Sicherheitsabstand von beispielsweise 5 % zu dieser Rechnerauslastung RA von 100 % eingehalten werden, damit das Steuergerät in jedem Fall auch noch plötzlich auftretende Belastungsspitzen abarbeiten kann, ohne überlastet zu werden.

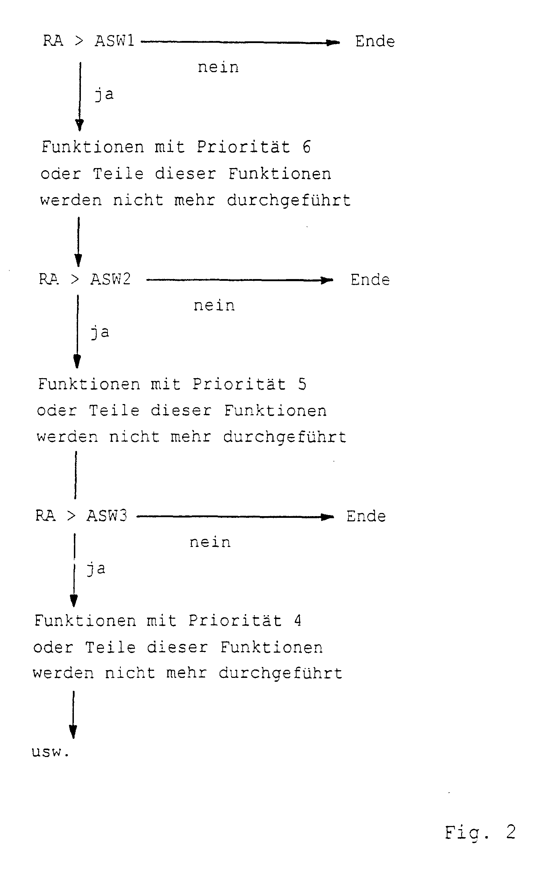

In der Figur 2 ist ein Verfahren dargestellt, das einer Überlastung des Steuergeräts entgegenwirkt. Bei dem Verfahren der Figur 2 wird die Rechnerauslastung RA mit beispielhaft drei Auslastungsschwellwerten ASW1, ASW2 und ASW3 verglichen. Der Auslastungsschwellwert ASW1 liegt beispielsweise bei den bereits erwähnten 95 %. Durch den Auslastungsschwellwert ASW1 wird dadurch erreicht, dass bei einer Rechnerauslastung RA von 95 % das Verfahren der Figur 2 einsetzt. Der Auslastungsschwellwert ASW2 liegt beispielhaft bei 93 % und der Auslastungsschwellwert ASW3 beispielhaft bei 91 %. Mit Hilfe der beiden Auslastungsschwellwerte ASW2, ASW3 wird erreicht, dass der Überlastung des Steuergeräts nicht nur kurzfristig entgegengewirkt wird, sondern dass eine Hysterese erzeugt wird, wie dies nachfolgend erläutert ist.

Gemäß der Figur 2 wird zuerst geprüft, ob die Rechnerauslastung RA größer ist als der Auslastungsschwellwert ASW1 von 95 %. Ist dies nicht der Fall, so wird das Verfahren nach der Figur 2 beendet. Ist jedoch die Rechnerauslastung RA größer als 95 %, so werden diejenigen Funktionen, die gemäß der Tabelle der Figur 1 mit der niedersten Priorität 6 versehen sind, nicht mehr durchgeführt. Dies hat zur Folge, dass aufgrund der abgeschalteten Funktionen der Priorität 6, also beispielsweise aufgrund der abgeschalteten Adaptionsfunktionen, die Belastung des Steuergeräts verringert wird. Das Maß der Verringerung hängt dabei davon ab, wieviele derartige Funktionen mit der Priorität 6 momentan zur Durchführung anstehen.

Bei einem großen Zeitraster von beispielsweise 50 ms der Funktionen mit der Priorität 6 ist es möglich, dass die Abschaltung dieser Funktionen nur eine geringe oder gar keine Entlastung für das Steuergerät darstellen. Aus diesem Grund wird gemäß dem Verfahren der Figur 2 in einem nachfolgenden Schritt geprüft, ob eine Entlastung des Steuergeräts stattgefunden hat.

Zu diesem Zweck wird geprüft, ob die Rechnerauslastung RA größer ist als der Ausschaltschwellwert ASW2, also größer als 93 %. Ist dies nicht der Fall, ist also die Belastung des Steuergeräts unter 93 % abgesunken, so wird das Verfahren nach der Figur 2 beendet. Ist jedoch die Belastung des Steuergeräts größer als 93 %, so bedeutet dies, dass die Abschaltung der Funktionen mit der Priorität 6 noch nicht ausreichend war. Aus diesem Grund werden dann auch noch diejenigen Funktionen nicht mehr durchgeführt, die gemäß der Tabelle der Figur 1 die Priorität 5 aufweisen. Es werden also beispielsweise zusätzlich auch noch die Diagnosefunktionen nicht mehr durchgeführt.

Durch den Vergleich der Rechnerauslastung RA mit dem Ausschaltschwellwert ASW2 von 93 % wird erreicht, dass das Steuergerät in jedem Fall um einen gewissen Betrag entlastet wird. Es wird damit verhindert, dass die Belastung des Steuergeräts sofort wieder über 95 % ansteigt, und dass dadurch das Verfahren nach der Figur 2 sofort wieder von vorne beginnt. Insoweit wird durch den genannten Vergleich mit dem Ausschaltschwellwert ASW2 eine Hysterese realisiert.

Diese Hysterese kann durch den in der Figur 2 angegebenen weiteren Vergleich der Rechnerauslastung RA mit dem Ausschaltschwellwert ASW3 weiter verfeinert werden. Wird bei dieser Prüfung festgestellt, dass die Rechnerauslastung RA kleiner geworden ist als 91 %, so wird das Verfahren nach der Figur 2 beendet. Ist jedoch die Rechnerauslastung RA größer als 91 %, so werden nun zusätzlich auch noch diejenigen Funktionen abschaltet, die in der Tabelle der Figur 1 die Priorität 4 aufweisen.

Dieses Verfahren nach der Figur 2 kann beliebig fortgesetzt werden.

Insbesondere die Grundfunktionen mit der Priorität 1, also beispielsweise die Einspritzung und die Zündung, sind jedoch von einer Abschaltung gemäß der Figur 2 ausgeschlossen. Dies bedeutet, dass diese Grundfunktionen in jedem Fall vollständig durchgeführt werden. Ggf. sind auch noch andere Funktionen mit anderen Prioritäten vorhanden, die ganz oder zumindest teilweise nicht abgeschaltet werden können.

Des Weiteren ist es möglich, dass bei der Abschaltung von Funktionen nicht die gesamte Funktion abgeschaltet wird, sondern nur Teilfunktionen davon. Werden nach dem Verfahren der Figur 2 beispielsweise die Diagnosefunktionen mit der Priorität 5 abgeschaltet, so ist es möglich, dass darin enthaltene Teilfunktionen, die beispielsweise für die Minimierung von Schadstoffen erforderlich sind, nicht abgeschaltet und damit weiterhin durchgeführt werden.

Weisen mehrere Funktionen dieselbe Priorität auf, sind also beispielsweise mehrere Adaptionsfunktionen in dem Steuergerät realisiert, so ist es des Weiteren möglich, dass bei der Abschaltung dieser Adaptionsfunktionen immer abwechselnd nur eine der genannten Adaptionsfunktionen nicht mehr durchgeführt wird.

Wie bereits erläutert wurde, werden die zeitsynchronen Funktionen in bestimmten vorgegebenen zeitlichen Abständen durchgeführt. Diese zeitlichen Abstände sind zumindest nicht in der Weise von der Drehzahl der Brennkraftmaschine abhängig, dass bei steigender Drehzahl die zeitlichen Abstände geringer werden und damit die Häufigkeit der Durchführung dieser Funktionen ansteigt, wie dies bei den drehzahlsynchronen Funktionen der Fall ist.

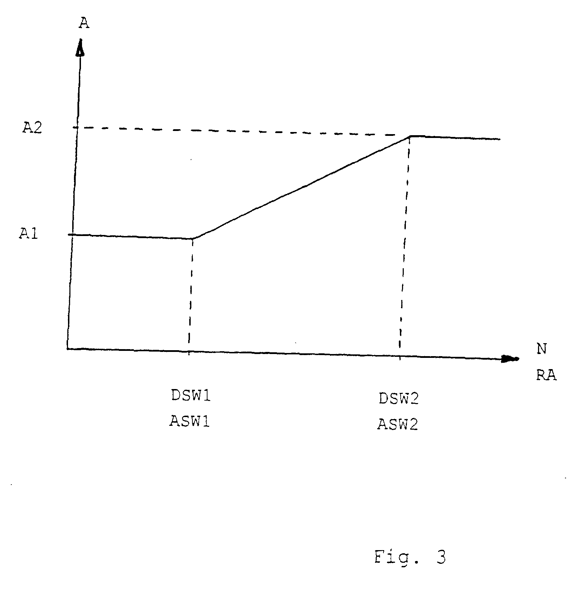

In der Figur 3 ist die Drehzahl der Brennkraftmaschine als Größe N dargestellt, über der der zeitliche Abstand der Durchführung von Funktionen als Größe A aufgetragen ist. Bis zu einem Drehzahlschwellwert DSW1, beispielsweise bis 4.000 UpM, ist ein zeitlicher Abstand A1, beispielsweise 10 ms vorgesehen. Bis zu dem Drehzahlschwellwert DSW1 werden also die zeitsynchronen Funktionen alle 10 ms durchgeführt. Ist die Drehzahl N größer als der Drehzahlschwellwert DSW1, so wird gemäß der Figur 3 der zeitliche Abstand A zwischen den einzelnen Durchführungen von Funktionen linear mit der Drehzahl erhöht. Je größer also die Drehzahl wird, desto größer wird auch der zeitliche Abstand der Durchführung der Funktionen.

Ab einem Drehzahlschwellwert DSW2, beispielsweise ab 6.000 UpM, wird der zeitliche Abstand wieder konstant gehalten. Beispielsweise wird der zeitliche Abstand A2 auf 12,5 ms gehalten.

Insgesamt bedeutet dies, dass der zeitliche Abstand A1, der unterhalb des Drehzahlschwellwerts DSW1 vorgesehen ist, kleiner ist als der zeitliche Abstand A2, der oberhalb des Drehzahlschwellwerts DSW2 vorgesehen ist. Der zeitliche Abstand der Durchführungen von Funktionen wird also vergrößert. Die Häufigkeit der Durchführung von Funktionen wird dadurch geringer. Dies hat zur Folge, dass das Steuergerät bei größeren Drehzahlen von den zeitsynchronen Funktionen weniger belastet wird als bei kleineren Drehzahlen. Insgesamt stellt dies eine Entlastung des Steuergeräts dar.

Anstelle der Drehzahl N und der Drehzahlschwellwerte DSW1, DSW2 können auch die die Rechnerauslastung darstellende Größe RA und die Auslastungsschwellwerte ASW1, ASW2 oder sonstige Auslastungsschwellwerte entsprechend verwendet werden. Dies ist in der Figur 3 ebenfalls beispielhaft eingezeichnet.

Abweichend von der Figur 3 ist es ebenfalls möglich, dass die Erhöhung des zeitlichen Abstands A bei der Durchführung von Funktionen nicht linear mit der Drehzahl, sondern stufenweise durchgeführt wird. So ist es möglich, dass bei einer bestimmten Drehzahlschwelle der zeitliche Abstand sprungartig erhöht wird. Ebenfalls ist es möglich, dass der Übergang von einem kleineren zu einem größeren zeitlichen Abstand mit Hilfe mehrerer Sprünge bei mehreren Drehzahlschwellen durchgeführt wird.

Wie bereits erwähnt, wirkt die Erhöhung des zeitlichen Abstands der Durchführung von Funktionen nur auf die zeitsynchronen Funktionen. Es ist jedoch ebenfalls möglich, auf eine entsprechende Art und Weise ab einem vorgebbarem Drehzahlschwellwert und/oder ab einem vorgebbaren Auslastungsschwellwert die von der Drehzahl der Brennkraftmaschine abhängigen Funktionen in ihrer Berechnungshäufigkeit zu reduzieren. So ist es z. B. möglich, bestimmte Funktionen nur noch jedes zweite Synchronraster durchzuführen.

Ebenfalls ist es möglich, bestimmte zeitsynchrone Funktionen, deren Durchführung in einem bestimmten Zeitraster zwingend erforderlich ist, von der beschriebenen Erhöhung des zeitlichen Abstands bzw. von der genannten Reduzierung der Berechnungshäufigkeit auszuschließen. Dabei kann es sich beispielsweise um Diagnosefunktionen handeln, die für die Minimierung der ausgestoßenen Schadstoffe der Brennkraftmaschine wesentlich sind.

## Patentansprüche

1. Verfahren zum Betreiben einer Brennkraftmaschine, insbesondere eines Kraftfahrzeugs, mittels eines Steuergeräts, bei dem eine Anzahl von Funktionen in zeitlichen Abständen und/oder in Abhängigkeit von der Drehzahl der Brennkraftmaschine durchgeführt werden und bei dem eine die Auslastung des Steuergeräts darstellende Größe (RA) und eine die Drehzahl der Brennkraftmaschine darstellende Größe (N) ermittelt wird, **dadurch gekennzeichnet daß** der zeitliche Abstand (A) der Durchführung der Funktionen erhöht wird, wenn die die Drehzahl darstellende Größe (N) größer ist als ein Drehzahlschwellwert (DSW1).

2. Verfahren nach Anspruch 1, **dadurch gekennzeichnet, dass** zusätzlich die Anzahl der durchgeführten Funktionen vermindert wird, wenn die die Auslastung darstellende Größe (RA) größer ist als ein Auslastungsschwellwert (ASW1).

3. Verfahren nach Anspruch 1, **dadurch gekennzeichnet, daß** die Anzahl von Funktionen in Klassen mit verschiedenen Prioritäten (1 ... 6) eingeteilt werden, und daß die Funktionen mit der niedersten Priorität (6) nicht durchgeführt werden, wenn die die Auslastung darstellende Größe (RA) größer ist als ein Auslastungsschwellwert (ASW1).

4. Verfahren nach Anspruch 3, **dadurch gekennzeichnet, daß** ein weiterer Schwellwert (ASW2) vorgesehen wird, der kleiner oder gleich ist als der Auslastungsschwellwert (ASW1), und daß die Funktionen mit der zweitniedersten Priorität (5) nicht durchgeführt werden, wenn die die Auslastung darstellende Größe (RA) größer ist als der weitere Schwellwert (ASW2).

5. Verfahren nach einem der Ansprüche 1 bis 4, **dadurch gekennzeichnet, daß** die folgenden Funktionen vorgesehen sind, wobei die Reihenfolge der Funktionen deren Priorität (1 ... 6) entspricht: Grundfunktionen, wie z.B. Einspritzung, Zündung; Motorschutzfunktionen, wie z.B. Klopfregelung; Abgasfunktionen, wie z.B. Lambdaregelung; Komfortfunktionen, wie z.B. Lastschlagdämpfung; Diagnosefunktionen; Adaptionsfunk-tionen, wie z.B. Anpassung an Fahrzeugstreuungen.

6. Verfahren nach einem der Ansprüche 1 bis 5, **dadurch gekennzeichnet, daß** zumindest einige der Funktionen, beispielsweise Grundfunktionen, in jedem Fall vollständig durchgeführt werden.

7. Verfahren nach einem der Ansprüche 1 bis 6, **dadurch gekennzeichnet, daß** zumindest einige der Funktionen, beispielsweise Abgasfunktionen, in Teilfunktionen zerlegt werden, und daß nur eine oder mehrere der Teilfunktionen nicht durchgeführt werden.

8. Verfahren nach einem der vorstehenden Ansprüche, **dadurch gekennzeichnet, daß** der zeitliche Abstand (A) der Durchführung der Funktionen mit der Drehzahl der Brennkraftmaschine bzw. der Auslastung des Steuergeräts linear oder sprungartig erhöht wird, wenn die die Drehzahl darstellende Größe (N) bzw. die die Auslastung darstellende Größe (RA) größer ist als der Drehzahlschwellwert (DSW1) bzw. der Auslastungsschwellwert (ASW1).

9. Verfahren nach Anspruch 8, **dadurch gekennzeichnet, daß** ein weiterer Schwellwert (DSW2, ASW2) vorgesehen wird, der größer ist als der Drehzahlschwellwert (DSW1) bzw. der Auslastungsschwellwert (ASW1), und daß der zeitliche Abstand (A) der Durchführung der Funktionen konstant gehalten wird, wenn die die Drehzahl darstellende Größe (N) bzw. die die Auslastung darstellende Größe (RA) größer ist als der weitere Schwellwert (DSW2, ASW1).

10. Verfahren nach einem der Ansprüche 8 oder 9, **dadurch gekennzeichnet, daß** der zeitliche Abstand (A) der Durchführung nur bei denjenigen Funktionen erhöht wird, die nicht von der Drehzahl der Brennkraftmaschine abhängig sind, also beispielsweise nicht bei Grundfunktionen.

11. Steuerelement, insbesondere Read-Only-Memory, zur Anwendung in einem Verfahren nach einem der Ansprüche 1 bis 10, zur Anwendung in einem Steuergerät einer Brennkraftmaschine, insbesondere eines Kraftfahrzeugs, auf dem ein Programm abgespeichert ist, das auf einem Rechengerät, insbesondere auf einem Mikroprozessor, ablauffähig ist.

12. Brennkraftmaschine insbesondere für ein Kraftfahrzeug, mit einem Steuergerät, von dem eine Anzahl von Funktionen in zeitlichen Abständen und/oder in Abhängigkeit von der Drehzahl der Brennkraftmaschine durchführbar sind und von dem eine die Auslastung des Steuergeräts darstellende Größe (RA) und eine die Drehzahl der Brennkraftmaschine darstellende Größe (N) ermittelbar sind, **dadurch gekennzeichnet, daß** von dem Steuergerät der zeitliche Abstand (A) der Durchführung der Funktionen erhöht wird, wenn die die Drehzahl darstellende Größe (N) größer ist als ein Drehzahlschwellwert (DSW1).

## Claims

1. Method for operating an internal combustion engine, in particular a motor vehicle, by means of a control unit in which a number of functions are executed at time intervals and/or as a function of the rotational speed of the internal combustion engine and in which a variable (RA) which represents the utility factor of the control unit and a variable (N) which represents the rotational speed of the internal combustion engine are determined, **characterized in that** the time interval (A) of the execution of the functions is increased if the variable (N) which represents the rotational speed is greater than a rotational-speed threshold value (DSW1).

2. Method according to Claim 1, **characterized in that** in addition the number of functions executed is reduced if the variable (RA) which represents the utility factor is greater than a utility-factor threshold value (ASW1).

3. Method according to Claim 1, **characterized in that** the number of functions is divided into classes with different priorities (1...6), and **in that** the functions with the lowest priority (6) are not executed if the variable (RA) which represents the utility factor is greater than a utility-factor threshold value (ASW1).

4. Method according to Claim 3, **characterized in that** a further threshold value (ASW2) is provided which is smaller than or equal to the utility-factor threshold value (ASW1), and **in that** the functions with the second lowest priority (5) are not executed if the variable (RA) which represents the utility factor is greater than the further threshold value (ASW2).

5. Method according to one of the Claims 1 to 4, **characterized in that** the following functions are provided, the sequence of the functions corresponding to their priority (1 ... 6): basic functions, for example, injection, ignition; engine protection functions, for example, knock control; exhaust gas functions, for example, lambda control; comfort functions, for example, load shift damping; diagnostic functions; adaptation functions, for example adaptation to vehicle variations.

6. Method according to one of Claims 1 to 5, **characterized in that** at least some of the functions, for example basic functions, are executed completely in all cases.

7. Method according to one of Claims 1 to 6, **characterized in that** at least some of the functions, for example, exhaust gas functions, are split up into partial functions and **in that** only one or more of the partial functions are not executed.

8. Method according to one of the preceding claims, **characterized in that** the time interval (A) of the execution of the functions with the rotational speed of the internal combustion engine or the utility factor of the control unit is increased linearly or suddenly if the variable (N) which represents the rotational speed or the variable (RA) which represents the utility factor is greater than the rotational-speed threshold value (DSW1) or the utility-factor threshold value (ASW1).

9. Method according to Claim 8, **characterized in that** a further threshold value (DSW2, ASW2) is provided which is greater than the rotational-speed value (DSW1) and the utility-factor threshold value (ASW1), and **in that** the time interval (A) for the execution of the functions is kept constant if the variable (N) which represents the rotational speed or the variable (RA) which represents the utility factor is greater than the further threshold value (DSW2, ASW1).

10. Method according to one of Claims 8 or 9, **characterized in that** the time interval (A) of the execution is increased only for those functions which are not dependent on the rotational speed of the internal combustion engine, that is to say for example, not for basic functions.

11. Control element, in particular a read-only memory, for application in a method according to one of Claims 1 to 10, for application in a control unit of an internal combustion engine, in particular of a motor vehicle, on which a program which can run on a computing unit, in particular on a microprocessor, is stored.

12. Internal combustion engine in particular for a motor vehicle, having a control unit by which a number of functions can be executed at time intervals and/or as a function of the rotational speed of the internal combustion engine, and by which a variable (RA) which represents the utility factor of the control unit and a variable (N) which represents the rotational speed of the internal combustion engine can be determined, **characterized in that** the time interval (A) of the execution of the functions is increased by the control unit if the variable (N) which represents the rotational speed is greater than a rotational-speed threshold value (DSW1).

## Revendications

1. Procédé pour faire fonctionner un moteur à combustion interne, en particulier celui d'un véhicule automobile à l'aide d'un appareil de commande qui exécute un certain nombre de fonctions à des intervalles de temps et/ou en fonction du régime (vitesse de rotation) du moteur à combustion interne, et pour lequel on détermine une grandeur (RA) qui représente l'utilisation de l'appareil de commande et une grandeur (N) qui représente le régime du moteur à combustion interne,
**caractérise en ce que**
l'intervalle de temps (A) de l'exécution des fonctions est augmenté si la grandeur (N) qui représente le régime est supérieure à un seuil de régime (DSW1).

2. Procédé selon la revendication 1,
**caractérisé en ce que**
de plus le nombre des fonction exécutées est abaissé si la grandeur (RA) qui représente l'utilisation est supérieure à un seuil de l'utilisation (ASW1).

3. Procédé selon la revendication 1,
**caractérisé en ce que**
le nombre de fonctions est réparti en classes de différentes priorités (1,...., 6) et les fonctions de la plus basse priorité (6) ne sont pas exécutées si la grandeur (RA) qui représente est supérieure à un seuil d'utilisation (ASW1).

4. Procédé selon la revendication 3,
**caractérisée en ce qu'**
une autre valeur de seuil (ASW2) est prévue inférieure ou égale à la valeur de seuil d'utilisation (ASW1), et les fonctions d'avant-dernière priorité (5) ne sont pas exécutées si la grandeur (RA) qui représente l'utilisation est supérieure à l'autre valeur seuil d'utilisation (ASW2).

5. Procédé selon l'une des revendications 1 à 4,
**caractérisée en ce que**
l'on prévoit les fonction suivantes à savoir, l'ordre de succession des fonctions correspondant à leur priorité (1, ..., 6) ; les fonctions de base comme par exemple l'injection, l'allumage ; les fonctions de protection du moteur comme par exemple régulation de la détonation ; les fonctions d'échappement comme par exemple la régulation lambda, les fonction de confort comme par exemple l'amortissement des chocs de charge ; les fonctions de diagnostic ; les fonctions d'adaptation comme par exemple d'ajustement à des dispersions de véhicule.

6. Procédé selon l'une des revendications 1 à 5,
**caractérisé en ce que**
certaines fonctions au moins, par exemple les fonctions de base, sont intégralement exécutées dans tous les cas.

7. Procédé selon l'une des revendications 1 à 6,
**caractérisé en ce que**
certaines fonctions au moins, par exemple les fonctions d'échappement, sont subdivisées en fonctions partielles et seules une ou plusieurs des fonctions partielles ne sont pas exécutées.

8. Procédé selon l'une des revendications précédentes,
**caractérisé en ce que**
l'intervalle de temps (A) de l'exécution des fonctions est augmenté de façon linéaire ou par paliers en fonction du régime du moteur à combustion interne ou l'utilisation de l'appareil de commande, si la grandeur (N) qui représente le régime ou la grandeur (RA) qui représente l'utilisation est supérieure à la valeur seuil de régime (DSW1) ou à la valeur seuil d'utilisation (ASW1).

9. Procédé selon la revendication 8,
**caractérisé en ce qu'**
une autre valeur de seuil (DSW2, ASW2) est prévue supérieure à la valeur de seuil de régime (DSW1) ou à la valeur de seuil d'utilisation (ASW1), et l'intervalle de temps (A) de l'exécution des fonctions est maintenu constant si la grandeur (N) qui représente le régime ou la grandeur (RA) qui représente l'utilisation est supérieure à l'autre valeur seuil (DSW2, ASW2).

10. Procédé selon l'une des revendications 8 ou 9,
**caractérisé en ce que**
l'intervalle de temps (A) de l'exécution n'est augmenté que pour les fonctions qui ne dépendent pas du régime du moteur à combustion interne, donc pas pour les fonctions de base par exemple.

11. Elément de commande, en particulier mémoire morte, destine à être utilisé dans un procédé selon l'une des revendications 1 à 10, destiné à être utilisé dans un appareil de commande d'un moteur à combustion interne, en particulier celui d'un véhicule automobile, avec un programme enregistre qui peut tourner sur un ordinateur, en particulier sur un microprocesseur.

12. Moteur à combustion interne, en particulier pour un véhicule automobile, avec un appareil de commande qui exécute un certain nombre de fonctions à des intervalles de temps et/ou en fonction du régime du moteur à combustion interne, et par lequel peuvent être déterminées une grandeur (RA) qui représente l'utilisation de l'appareil de commande et une grandeur (N) qui représente le régime du moteur à combustion interne,
**caractérisé en ce que**
l'intervalle de temps (A) de l'exécution des fonctions est augmenté par l'appareil de commande si la grandeur (N) qui représente le régime est supérieure à une valeur seuil de régime (DSW1).
